# EUROPEAN PATENT SPECIFICATION

(11) **EP 3 832 091 B1**
(45) Date of publication and mention of the grant of the patent: **14.06.2023**
(21) Application number: 19213685.1
(22) Date of filing: 04.12.2019
(51) Int. Cl.: F02C 6/08, F02C 7/22

(54) **GAS TURBINE ASSEMBLY FOR POWER PLANT APPLICATION FED BY AT LEAST TWO DIFFERENT FUELS (FUEL-GAS OR FUEL-OIL) AND A METHOD FOR OPERATING THIS ASSEMBLY WHEN SWITCHING FUELS OR WHEN OPERATING THIS ASSEMBLY WITH FUEL-OIL**
GASTURBINENANORDNUNG FÜR EINE DURCH MINDESTENS ZWEI VERSCHIEDENE BRENNSTOFFE (BRENNGAS ODER BRENNÖL) GESPEISTE KRAFTANLAGE UND VERFAHREN ZUM BETRIEB DIESER ANORDNUNG BEIM UMSCHALTEN VON BRENNSTOFFEN ODER BEIM BETRIEB DIESER ANORDNUNG MIT BRENNÖL
ENSEMBLE DE TURBINE À GAZ POUR APPLICATION DE CENTRALE ÉLECTRIQUE ALIMENTÉE PAR AU MOINS DEUX COMBUSTIBLES DIFFÉRENTS (GAZ COMBUSTIBLE OU MAZOUT) ET PROCÉDÉ POUR FAIRE FONCTIONNER CET ENSEMBLE LORS DU CHANGEMENT DE COMBUSTIBLES OU LORS DE L'UTILISATION DE CET ENSEMBLE AVEC DU MAZOUT

(43) Date of publication of application: 09.06.2021
(73) Proprietor: Ansaldo Energia Switzerland AG, 5400 Baden (CH)
(72) Inventor: WERTHWEIN, Pascal, 5400 BADEN (CH); MEIER, Matthias, 5304 ENDINGEN (CH); KAMMERER, Albert, 8050 ZÜRICH (CH)
(74) Representative: Martini, Gabriele

(56) References cited:
- EP-A2- 2 592 250
- WO-A1-2015/022378
- US-A- 6 145 318
- US-A1- 2011 016 866

## Description

### Field of the Invention

The present invention relates to the technical field of gas turbine assemblies for industrial applications (in the following only GT). As known, a GT compresses air, mixes the compressed air with fuel and ignites the mixture in a combustor, and expands the hot gas in a turbine afterwards for the generation of mechanical work on the GT's shaft. To be more precise, the technical field of the present invention relates to a particular type of GTs suitable to be operated with both gas and oil as fuel source. Both fuels are provided to the gas turbine's burners via two separated fuel distribution systems. Depending on the fuel source in operation, this kind of GT is operated either in "fuel-gas mode" or in "fuel-oil mode". In consideration of the above, the present invention solves the problem on how to safely operate the GT when switching fuels and when operating in fuel-oil (FO) mode.

### Description of prior art

In general, a GT assembly comprises the following assemblies: compressor, combustor and turbine. The axial compressor is pressurizing air that is sucked into the compressor from the engine's environment. Compressed air is leaving the compressor at its exit into a fixed volume (called "plenum") from where it is distributed to the combustor assembly. Typically, the combustor assembly consists out of a plurality of combustor cans and burners, mixing the pressurized air with fuel (gas or oil) and igniting the mixture. Afterwards, the resulting hot gas is expanded through a turbine. Mechanical work performed by the hot gas flow on the turbine's blades, is translated into rotational energy due to the circumferential assembled blades to the GT's rotor.

To meet both efficiency and emission targets, during full load and while operating at part and low load, multiple measures can be taken. One of those measures, but not limited to, is the Applicant's sequential combustion technology in its GTs. This technology follows the principle of a re-heat step in the GT's thermodynamic cycle. While the fuel air mixture in the first stage must be ignited, it is self-igniting in the sequential/second stage. Today, at least two kind of GTs are known utilizing that technology. The Applicant's "GT26", available on the market, has two combustors, with annular arranged burners, physically separated by one turbine stage (called high pressure turbine). A second type of the sequential combustion technology is embodied in the Applicant's "GT36". This engine is equipped with annular arranged combustor cans, each can with a first and a second stage burner. Those two examples of GTs assemblies (GT26 and GT36) have been cited only as non-limiting examples, wherein the present invention can be applied. Indeed, the present invention may be applied also in GTs having a single combustion stage.

As known, today's GTs (either single or sequential combustion type) can be configured to be operable with at least both fuel-gas (in the following only FG) and/or fuel-oil (in the following only FO). Those configurations allow the GT operator to operate the engine in the so called "FG mode" or in "FO mode" operation. Therefore, these GTs are equipped with two different Fuel Distribution Systems (in the following only FDS). One FG FDS for feeding the gas nozzles and one FO FDS for feeding the oil nozzles of the combustors' burners. When switching fuels from gas to oil and when the GT is operated in FO mode, the fuel gas system and its corresponding FDS is shut down. However, residual fuel gas in the fuel gas FDS presents a safety risk as it is exposed to hot surfaces and the chance of hot combustion gases entering the shutdown FDS. Moreover, due to small pressure differences between the annular arranged combustors, when operated in FO mode, backflow of hot combustion gases and/or oil mist into the FG nozzles may can happen, leading to damages in the FG FDS. To avoid the above stated problems, the FG system is purged with a non-ignitable gas (e.g. nitrogen) and afterwards continuously purge with air from the compressor exit.

WO2015022378 discloses a purge system for a gas turbine, wherein the purge system comprises a cooler having an inlet end and an outlet end, a first pipeline connecting the compressor to the inlet end of the cooler, and at least one second pipeline connecting the outlet end of the cooler to a gas fuel supply pipeline of the gas fuel system, so that when the gas fuel system is at least partially closed, air from the compressor can purge the gas fuel supply pipeline.

### Disclosure of the invention

Accordingly, a primary object of the present invention is to provide a new and inventive solution for overcoming the above problems that occur during the FO operation or during the switch from FG to FO i.e. how to avoid the necessary purge of the FG systems with nitrogen and how to avoid continuously purging it afterwards with hot air from the compressor exit. Accordingly, a primary object of the present invention is to provide a new and inventive solution on how to prevent the above stated problems of residual fuel ignition in the FDS and/or hot gas recirculation in the FDS, during fuel switch over, or during FO operation, in a safer way. In particular, the primary object of the present invention is, therefore, to provide a GT assembly for power plant applications, fed by a dual fuel sources (FG and FO) as claimed in claim 1 and a method for operating that GT assembly as claimed in claim 6.

As a preamble, a GT assembly that can be improved by the present invention is a GT assembly for power plant comprising:
- a compressor, configured for compressing air;
- a dual-fuel source configured for selectively delivering FG or FO;
- a combustor assembly, comprising FG nozzles and FO nozzles, configured to feed FG and FO, respectively, into the main flow and to generate a hot gas flow; the combustor assembly may comprise a single combustion stage or a first and a second combustion stage in series;
- a turbine, configured to be driven by the hot gas to perform mechanical work on a rotor;
- a fuel system feeding fuel to the burner's nozzles, comprising FDS for both FG and FO sections.

Referring to the combustor assembly, this combustor assembly may be a sequential combustor comprising a plurality of can combustors, wherein each can combustor comprises in series the first combustion stage and the second combustion stage. Alternatively, the combustor assembly may be a sequential combustor comprising a first combustion stage and the second combustion stage divided by a high-pressure turbine.

As previously stated, when operated in FO mode, the FG system of the GT is closed. However, there is a remaining risk of hot gases and/or oil mist entering the FG FDS (claimed first duct) and recirculating in it. Moreover, when switching fuels from FG to FO, residual FG in the FG piping downstream the closed FG control valves (claimed first duct), must be purged out to avoid any risk of residual gas igniting in the piping and/or FDS.

According to the invention, the GT additionally comprises a duct (claimed second duct), configured to feed cooled air from the GT's cooling air system to the first duct, to purge out residual FG during fuel switch-over and to "block" with a continuous air flow the FG nozzles of burners during FO operation. In particular, the invention states that the temperature of the air (340°C), supplied to second duct, is below the auto-ignition temperature of the FG.

As known, the gas turbine moreover comprises a control unit configured for selectively operating the gas turbine in FG or FO operation mode. In the last case, the control unit will open the first duct to deliver cooled air to the second duct, as soon as the FG valves are closed.

Please notice that with the wording "first and second duct" not necessarily a single duct is meant, but also distribution lines comprising more than one duct.

The GT comprises a heat exchanger (for example a Once Through Cooler "OTC"), configured to cool air from the compressor end for cooling purposes of GT components. In this case, the first duct is connected downstream the OTC and extracts a portion of the described cooling air, that is further delivered to the second duct. If this is not the case, uncooled air cannot be used to purge out residual FG, as it is above the FG's auto-ignition temperature. Thus, the FG piping and FDS must be purged with nitrogen during fuel switch-over, what results in an additional Nitrogen supply unit to be connected to the GT's FG system.

In order to ensure a forward flow of air to the second duct, cooling air extracted downstream the heat exchanger needs to have a pressure higher than the FG nozzles exit pressure.

Of course, the present invention may also be defined as a method for operating a GT assembly for power plant applications fed by a dual-fuel source (FG and FO). The method may comprise the steps of:
a) providing a GT assembly with sequential combustion technology, as described before.
b) GT to be operated in FO mode, in which the FG system is closed.
c) Supplying (preferably continuously during FO operation) cooled air to the second duct at a temperature below the FG's auto-ignition temperature (preferably between 320°C and 360°C, more preferably at 340°C).

Step c) is performed prior to fuel-oil operation, during fuel switch over mode. Thus, the same cooled air is acting as purge air.

Step c) is performed by using compressed air from the compressor, cooled by the heat exchanger.

It has to be understood that both the foregoing general description and the following detailed description are exemplary and are intended to provide further explanation of the invention as claimed. Other advantages and features of the invention will be apparent from the following description, drawings and claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figure 1 is a schematic section view of a first example of GT assembly for power plant application suitable for improvement according to the present invention;
- figure 2 is a schematic section view of a second example of gas turbine assembly for power plants, suitable for being improved according to the present invention;
- figure 3 is a symbolic schematic view of an example of a GT assembly that requires minimal modification for being improved by the present invention;
- figure 4 is a simplified piping diagram according to the present invention that can be incorporated (not only) in the GT of figures 1-3.

### Detailed description of preferred embodiments of the invention

In cooperation with the attached drawings, the technical contents and detailed description of the present invention are described thereinafter according to preferred embodiments, being not used to limit its executing scope. Any equivalent variation and modification made according to appended claims is all covered by the claims claimed by the present invention.

References will now be made to the drawing figures to describe the present invention in detail.

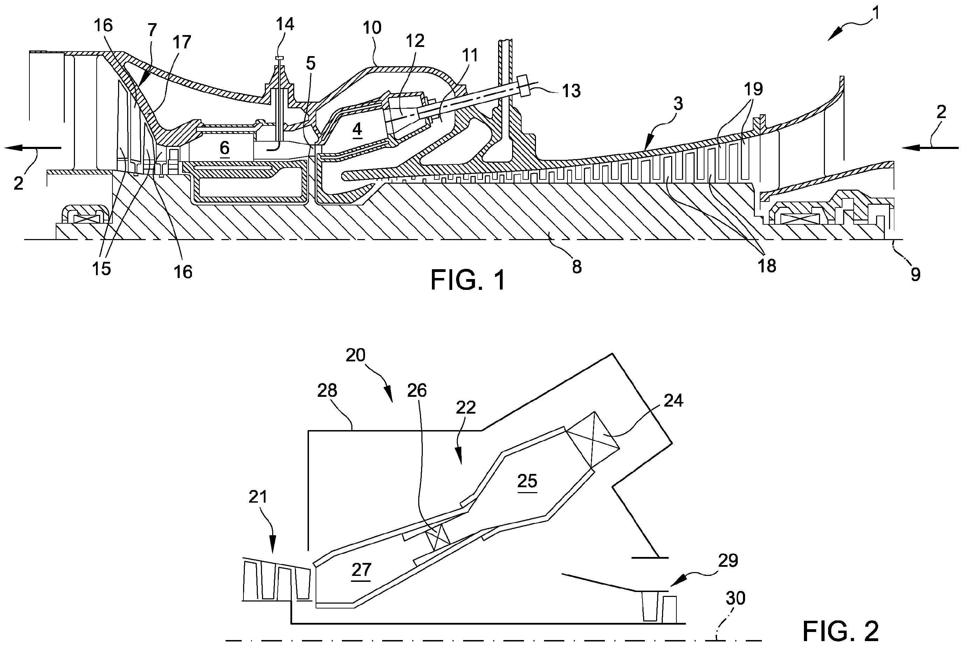

Reference is now made to Fig. 1 that is a schematic view of a first example of a gas turbine 1 that can be improved with the present invention. In particular, figure 1 discloses a GT with sequential combustor technology with combustor stages separated by a high-pressure turbine. Following the main flow 2, the GT 1 of figure 1 comprises a compressor 3, a first combustion stage 4, a high-pressure turbine 5, a second combustion stage 6 and a low-pressure turbine 7. The compressor 3 and the two turbines 5, 7 are connected to a common rotor 8, rotating around an axis 9 and being surrounded by a concentric casing 10. The compressor 3 is supplied with air and is equipped with rotating blades 18 and stator vanes 19 configured for compressing the air entering the compressor 3. The compressed air leaving the compressor flows into a plenum 11 and from there into a plurality of first burners 12 where this compressed air is mixed with fuel supplied by a first fuel supply 13. The fuel/compressed air mixture flows into a first combustion chamber 4 where this mixture is ignited and combusted. The resulting hot gas leaves the first combustor chamber 4 and drives the high-pressure turbine 5 performing work on the rotor 8. Downstream of the high-pressure turbine 5 the partially expanded hot gas flows into a plurality of second burners where additional fuel is supplied by second fuel source 14. The first and the second fuel source may be the same fuel source. The partially expanded hot gas is at high temperature and contains enough oxygen for a further combustion that, based on a self-ignition, takes place in a second combustion chamber 6 arranged downstream the second burners. The reheated hot gas leaves the second combustion chamber 6 and flows in the low-pressure turbine 7 for performing rotating work on the rotor 8. The low-pressure turbine 7 comprises a plurality of stages, or rows, of rotor blades 15 arranged in series in the main flow direction. Such stages of blades 15 are interposed by stages of stator vanes 16. The rotor blades 15 are connected to the rotor 8 whereas the stator vanes 16 are connected to a vane carrier 17 that is a concentric casing surrounding the low-pressure turbine 7. Each burner of this example is configured for injecting different kinds of fuel, namely FG or FO, i.e. each burner comprises a plurality of nozzles configured for injecting GF and connected to a FG source and a plurality of nozzles configured for injecting FO and connected to an FO source. Indeed, depending on power plant conditions it is preferable to use FG or FO. To perform GT operation with FG or FO, the GT assembly comprises a GT control unit, configured for selectively switching between FG operation and FO operation

Reference is now made to Fig. 2 that is a schematic view of a second example of a GT 1 that can be improved with the present invention. In particular, figure 2 discloses a GT 20 provided with a compressor 29, a turbine 21 and a sequential combustor arrangement 22. The sequential combustor arrangement 22 of figure 2 comprises a plurality of can combustors wherein each can combustor comprises first burners 24, a first combustion chamber 25, a second burner 26, and a second combustion chamber 27. The first burner 24, the first combustion chamber 25, the second burner 26 and the second combustion chamber 27 are arranged sequentially in a fluid flow connection. The sequential combustor is housed in a combustor can casing 28, and a plurality of cans are arranged as a ring around the turbine axis. Fuel is introduced via a first fuel injector (not shown) into the first burner 24, where the fuel is mixed with the compressed air supplied by the compressor 29. A second fuel is introduced into the second burner 26 via a second fuel injector (not shown) and mixed with hot gas leaving the first combustion chamber 25. The hot gas leaving the second combustion chamber 27 drives the turbine 21 performing work on a rotor 30. Also in this example, each burner is configured for injecting FG or FO, i.e. each burner comprises a plurality of nozzles configured for injecting FG and connected to a FG source and a plurality of nozzles configured for injecting FO and connected to an FO source. As for the previous example, the GT 20 comprises a control unit configured for selectively switching between FG or FO operation.

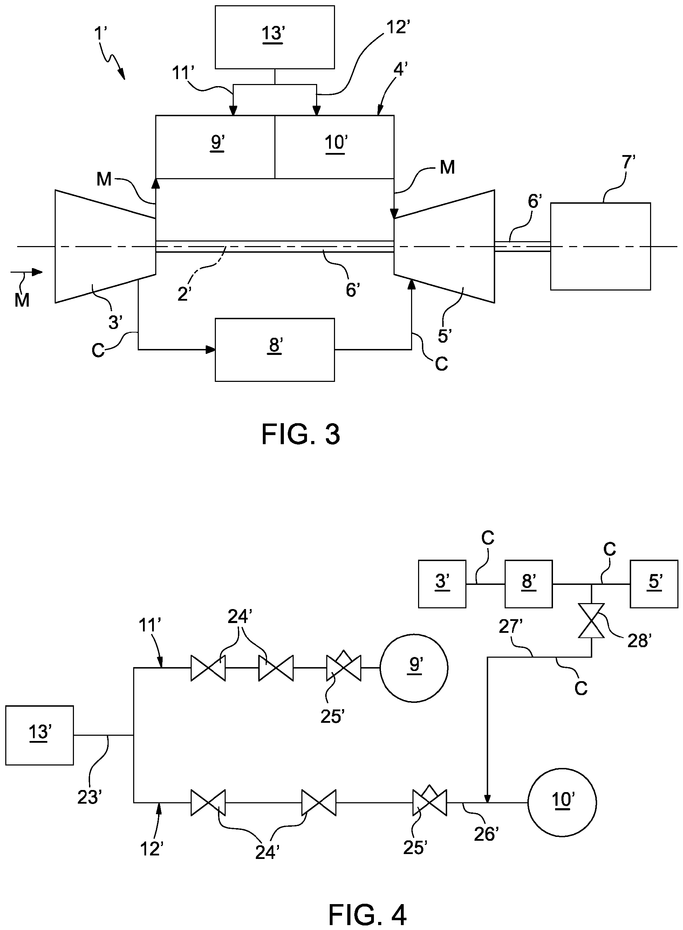

Reference is now made to Fig. 3 that is a schematic view of an embodiment of a GT assembly for power plants (in the following only gas turbine) suitable for being provided with the present invention. Figure 3 discloses a generic GT 1' that can be of the type of figure 1 (with an high and a low pressure turbine) or of the type of figure 2 (can combustor structure). According to this example the GT 1' has a rotor 6' defining an axis 2' and comprises in series along the main flow M:
- a compressor section 3',
- a combustor section 4' wherein the compressed air is mixed with fuel and this mixture is combusted to create a hot gas flow,
- a turbine section 5' where the hot gas flow expands performing rotating work on the rotor 6'.

According to figure 3, downstream the turbine 5' the rotor 6' drives the rotating part of a generator 7'. Moreover, the gas turbine 1' of figure 3 is a GT fed by a fuel source 13', i.e. a fuel source configured for selectively feeding FG and FO. As schematically disclosed the dual-fuel source 13' is connected to a fuel distribution system comprising a FO distribution line 11' configured for feeding the FO nozzles 9' of the combustor 4' and a FG distribution line 12' configured for feeding the FG nozzles 10' of the combustor 4'. These nozzles may be nozzles of the first or of the second combustion stage. In figure 3 the reference 8' refer to a heat exchanger, preferably a Once Through Cooler (OTC) device, fed by compressed air spilled from the compressed C and configured for cooling this air and for suppling this cooling air to the turbine 5' for cooling purpose. The kind of GT 1' as disclosed in figure 3 is particular useful for being implemented with the present invention, i.e. with minimal new components to be added in this assembly due to the presence of the heat exchanger 8'.Reference is made now to figure 4 that is a schematic view of the fuel distribution system of figure 3 improved by the present invention. As foregoing mentioned, the fuel source 13' is configured for delivering FO in the FO distribution line 11' towards the FO nozzles 9' and FG in the FG distribution line 12' towards the FG nozzles 10'. Each line 11' 12' of the fuel system is provided with at least a valve 24'. In FG operation, the valves 24' of the FO distribution line 11' are driven to be closed. On the contrary, in FO operation, the valves 24' 25' of the FG distribution line 12' are driven to be closed. However, as foregoing described in the prior art chapter, during FO operation, some FO can enter the FG nozzles. Moreover, in the same terminal portion of the FG distribution line 12' some residual FG may remain also after the shut-down of the FG valves 24' and 25', generating the potential risk of undesired ignitions. This terminal portion of the FG distribution line 12' is represented in figure 4 with the reference 26'. i.e. between the FG nozzles 10' and the last downstream valve 25'. According to the general definition of the present invention, in this duct 26' cooled air (i.e. air having a temperature less than the auto ignition temperature of the gas fuel, for instance no more than 340°C) is fed. According to the embodiment of figure 4, the cooled air C fed in the duct 26' is part of the cooling air exiting from the heat exchanger 8' in turn fed by compressed air and configured for generating cooling air to be supplied to the turbine 5'. Since this heat exchanger 8' is already present in the turbine assembly, for performing the present invention it is only necessary to provide a duct 27' (preferably with at least a valve 28') connecting the exit of the heat exchanger 8' to the duct 26', i.e. a terminal portion of the FG line 12' downstream the gas nozzles 10'. Preferably, this feeding of cooled air inside the duct 27' may be performed continuously during the FO operation. In this way, during the FO operation, any undesired FO ingestion in the FG distribution line 12' is avoided and also eventual residual FG is purged out. Moreover, due to the low temperature of the cooled air, the air-fuel mixture has a temperature below the flammability limit of the FG so that any undesired ignitions are avoided, too.

Even if the new duct 27' has been represented only in reference to the GT of figure 3, this duct 27' and the heat exchanger 8' may be easily incorporated in a GT assembly as disclosed in figures 1 or 2.

As a non-limiting example, the present invention may be applied to a dual fuel injector comprising a plurality of separate streamlined fingers wherein each trailing edge of these fingers is provided with dual fuel concentric nozzles selectively fed by FG or FO. Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A gas turbine for power plant fed by a dual-fuel source; the gas turbine (1, 1', 20) comprising:
- a compressor (3, 3', 29) configured for compressing incoming air;
- a dual fuel source (13') configured for selectively delivering gas fuel or oil fuel depending on different operating conditions;
- a combustor assembly (4', 22) comprising fuel gas nozzles (10') and fuel oil nozzles (9') configured for feeding fuel gas and fuel oil in the main flow;
- a heat exchanger (8') configured for cooling compressed air spilled from the compressor (3') and for feeding this cooled air to a turbine (5') for cooling purpose;
- a fuel distribution system comprising an fuel oil line (11') for feeding fuel oil to the fuel oil nozzles (9') and a fuel gas line (12') for feeding fuel gas to the fuel gas nozzles (10'); at least the fuel gas line (12') being provided with at least a valve (24') configured to be closed during oil fuel only operation and a first duct (26') between the last downstream valve (24') and the fuel gas nozzles (10');
- the turbine (5, 5', 21) configured to be driven by the hot gas for performing work on a rotor (6);
wherein the gas turbine (1) moreover comprises a second duct (27') configured for feeding cooled air into the first duct (26') during fuel oil operation wherein the cooled air has a temperature lower than the auto ignition temperature of the fuel gas;
wherein the gas turbine (1) moreover comprises:
- a control unit configured for operating the gas turbine (1, 1', 20) in fuel oil operation; during fuel oil operation the control unit configured for driving the at least one valve (24') of the fuel gas line (12') to be closed and for feeding the cooled air in the second duct (27');
wherein the control unit being configured for continuously feeding the cooled air in the second duct (27') during fuel oil only operation;
**characterized in that** the second duct (27') is connected downstream to the exit of the heat exchanger (8') so that the cooled air fed in the second duct (27') is part of the cooling air exiting from the heat exchanger (8');
wherein the heat exchanger (8') is configured for cooling the compressed air at a temperature between 320°C and 360°C, preferably at 340°C.

2. Gas turbine as claimed in claim 1, wherein the combustor assembly comprises a first combustor stage and a second combustor stage (10) and the heat exchanger (8') is configured for delivering the cooled air at a pressure higher than the pressure in the second combustor stage (10) so that the cooled air is also acting as purge air.

3. Gas turbine as claimed in any one of the foregoing claims, wherein the combustor assembly is a sequential combustor assembly.

4. Gas turbine as claimed in claim 3, wherein the combustor assembly comprises a plurality of can combustors; each can combustor comprising in series a first combustion stage and a second combustion stage.

5. Gas turbine as claimed in claim 3, wherein the combustor assembly comprises a first combustion stage and a second combustion stage divided by a high pressure turbine; downstream the second combustion stage being present a low pressure turbine.

6. A method for operating a gas turbine assembly for power plant fed by a dual fuel source; the method comprising the steps of:
a) providing a gas turbine assembly (1, 1', 20) as claimed in claim 1;
b) controlling the gas turbine (1, 1', 20) for being operated in fuel oil operation wherein the at least one valve (24') of the fuel gas line (12') are driven to be closed;
c) feeding cooled air in the first duct (26') at a temperature below the auto ignition temperature of the FG;
wherein:
- the step c) is performed so that the cooled air is compressed air spilled by the compressor (3') and cooled by the heat exchanger (8') at a temperature between 320°C and 360°C, preferably at 340°C;
wherein the step c) is performed continuously during the fuel oil operation.

7. Method as claimed in claim 6, wherein the combustor comprises a first combustor stage and a second combustor stage (10) and the step c) is performed so that the cooled air is also acting as purge air having a pressure higher than the pressure of the second combustor stage (10).

## Patentansprüche

1. Gasturbine für ein Kraftwerk, das von einer Dual-Brennstoff-Quelle gespeist wird; wobei die Gasturbine (1, 1', 20) umfasst:
- einen Verdichter (3, 3', 29), der dazu konfiguriert ist, einströmende Luft zu verdichten;
- eine Dual-Brennstoffquelle (13'), die dazu konfiguriert ist, in Abhängigkeit von verschiedenen Betriebsbedingungen selektiv Brennstoffgas oder Brennstofföl zuzuführen;
- eine Brennkammeranordnung (4', 22), die Brennstoffgasdüsen (10') und Brennstofföldüsen (9') umfasst, die dazu konfiguriert sind, Brennstoffgas und Brennstofföl in den Hauptstrom einzuspeisen;
- einen Wärmetauscher (8'), der dazu konfiguriert ist, die aus dem Verdichter (3') austretende verdichtete Luft zu kühlen und diese gekühlte Luft einer Turbine (5') zu Kühlzwecken zuzuführen;
- ein Brennstoffverteilungssystem, das eine Brennstoffölleitung (11') zum Zuführen von Brennstofföl zu den Brennstofföldüsen (9') und eine Brennstoffgasleitung (12') zum Zuführen von Brennstoffgas zu den Brennstoffgasdüsen (10') umfasst; wobei wenigstens die Brennstoffgasleitung (12') mit wenigstens einem Ventil (24'), das dazu konfiguriert ist, während eines reinen Brennstoffölbetriebs geschlossen zu sein, und einem ersten Kanal (26') zwischen dem letzten stromabwärts gelegenen Ventil (24') und den Brennstoffgasdüsen (10') versehen ist;
- die Turbine (5, 5', 21) dazu konfiguriert ist, durch das heiße Gas angetrieben zu werden, um an einem Rotor (6) Arbeit zu verrichten;
wobei die Gasturbine (1) außerdem einen zweiten Kanal (27') umfasst, der dazu konfiguriert ist, während des Brennstoffölbetriebs gekühlte Luft in den ersten Kanal (26') einzuspeisen, wobei die gekühlte Luft eine niedrigere Temperatur als die Selbstzündungstemperatur des Brennstoffgases aufweist;
wobei die Gasturbine (1) außerdem umfasst:
- eine Steuereinheit, die dazu konfiguriert ist, die Gasturbine (1, 1', 20) im Brennstoffölbetrieb zu betreiben; wobei die Steuereinheit dazu konfiguriert ist, während des Brennstoffölbetriebs das wenigstens eine Ventil (24') der Brennstoffgasleitung (12') zu schließen und die gekühlte Luft in den zweiten Kanal (27') einzuspeisen;
wobei die Steuereinheit dazu konfiguriert ist, während eines reinen Brennstoffölbetriebs die gekühlte Luft kontinuierlich in den zweiten Kanal (27') einzuspeisen;
**dadurch gekennzeichnet, dass** der zweite Kanal (27') stromabwärts mit dem Ausgang des Wärmetauschers (8') verbunden ist, so dass die in den zweiten Kanal (27') eingespeiste gekühlte Luft Teil der aus dem Wärmetauscher (8') austretenden Kühlluft ist;
wobei der Wärmetauscher (8') dazu konfiguriert ist, die verdichtete Luft auf eine Temperatur zwischen 320 °C und 360 °C, vorzugsweise auf 340 °C, zu kühlen.

2. Gasturbine nach Anspruch 1, wobei die Brennkammeranordnung eine erste Brennkammerstufe und eine zweite Brennkammerstufe (10) umfasst und der Wärmetauscher (8') dazu konfiguriert ist, die gekühlte Luft mit einem Druck zuzuführen, der höher ist als der Druck in der zweiten Brennkammerstufe (10), so dass die gekühlte Luft auch als Spülluft wirkt.

3. Gasturbine nach einem der vorangehenden Ansprüche, wobei die Brennkammeranordnung eine sequentielle Brennkammeranordnung ist.

4. Gasturbine nach Anspruch 3, wobei die Brennkammeranordnung mehrere Dosenbrenner umfasst; wobei jeder Dosenbrenner in Reihe eine erste Verbrennungsstufe und eine zweite Verbrennungsstufe umfasst.

5. Gasturbine nach Anspruch 3, wobei die Brennkammeranordnung eine erste Verbrennungsstufe und eine zweite Verbrennungsstufe umfasst, die durch eine Hochdruckturbine getrennt sind; wobei stromabwärts der zweiten Verbrennungsstufe eine Niederdruckturbine vorhanden ist.

6. Verfahren zum Betreiben einer Gasturbinenanordnung für ein Kraftwerk, das von einer Dual-Brennstoffquelle gespeist wird; wobei das Verfahren die Schritte umfasst:
a) Bereitstellen einer Gasturbinenanordnung (1, 1', 20) nach Anspruch 1;
b) Steuern der Gasturbine (1, 1', 20) für den Betrieb im Brennstoffölbetrieb, wobei das wenigstens eine Ventil (24') der Brennstoffgasleitung (12') geschlossen wird;
c) Zuführen von gekühlter Luft in den ersten Kanal (26') bei einer Temperatur unterhalb der Selbstzündungstemperatur des Brennstoffgases;
wobei:
- der Schritt c) so durchgeführt wird, dass die gekühlte Luft verdichtete Luft ist, die vom Verdichter (3') ausgestoßen wird und vom Wärmetauscher (8') auf eine Temperatur zwischen 320 °C und 360 °C, vorzugsweise auf 340 °C, gekühlte wird;
wobei der Schritt c) während des Brennstoffölbetriebs kontinuierlich durchgeführt wird.

7. Verfahren nach Anspruch 6, wobei die Brennkammeranordnung eine erste Brennkammerstufe und eine zweite Brennkammerstufe (10) umfasst und der Schritt c) so durchgeführt wird, dass die gekühlte Luft auch als Spülluft wirkt, die einen Druck höher als der Druck der zweiten Brennkammerstufe (10) aufweist.

## Revendications

1. Turbine à gaz pour centrale électrique alimentée par une source à deux combustible, la turbine à gaz (1, 1', 20) comprenant :
- un compresseur (3, 3', 29) configuré pour comprimer l'air entrant ;
- une source à deux combustibles (13') configurée pour fournir sélectivement du gaz combustible ou du fioul en fonction des différentes conditions de fonctionnement ;
- un ensemble de chambre de combustion (4', 22) comprenant des buses de gaz combustible (10') et des buses de fioul (9') configurées pour alimenter le gaz combustible et le fioul dans le flux principal ;
- un échangeur de chaleur (8') configuré pour refroidir l'air comprimé déversé depuis le compresseur (3') et pour acheminer cet air refroidi vers une turbine (5') à des fins de refroidissement ;
- un système de distribution de combustible comprenant une conduite de fioul (11') pour alimenter en fioul les buses de fioul (9') et une conduite de gaz combustible (12') pour alimenter en gaz combustible les buses de gaz combustible (10') ; au moins la conduite de gaz combustible (12') étant pourvue d'au moins une vanne (24') configurée pour être fermée pendant le fonctionnement au fioul uniquement et d'un premier conduit (26') entre la dernière vanne en aval (24') et les buses de gaz combustible (10') ;
- la turbine (5, 5', 21) configurée pour être entraînée par le gaz chaud pour effectuer un travail sur un rotor (6) ;
dans laquelle la turbine à gaz (1) comprend en outre un second conduit (27') configuré pour alimenter en air refroidi le premier conduit (26') pendant le fonctionnement au fioul dans laquelle l'air refroidi a une température inférieure à la température d'auto-inflammation du gaz combustible ;
dans laquelle la turbine à gaz (1) comprend en outre :
- une unité de commande configurée pour faire fonctionner la turbine à gaz (1, 1', 20) au fioul ; pendant le fonctionnement au fioul, l'unité de commande est configurée pour commander la fermeture d'au moins une vanne (24') de la conduite de gaz combustible (12') et pour alimenter l'air refroidi dans le second conduit (27') ;
dans laquelle l'unité de commande est configurée pour alimenter en continu l'air refroidi dans le second conduit (27') pendant le fonctionnement au fioul uniquement ;
**caractérisée en ce que** le second conduit (27') est relié en aval à la sortie de l'échangeur de chaleur (8') de sorte que l'air refroidi alimenté dans le second conduit (27') fait partie de l'air refroidi sortant de l'échangeur de chaleur (8') ;
dans laquelle l'échangeur de chaleur (8') est configuré pour refroidir l'air comprimé à une température comprise entre 320 °C et 360 °C, de préférence à 340 °C.

2. Turbine à gaz selon la revendication 1, dans laquelle l'ensemble chambre de combustion comprend un premier étage de combustion et un second étage de combustion (10) et l'échangeur de chaleur (8') est configuré pour délivrer l'air refroidi à une pression supérieure à la pression dans le second étage de combustion (10) de sorte que l'air refroidi agit également comme air de purge.

3. Turbine à gaz selon l'une quelconque des revendications précédentes, dans laquelle l'ensemble de chambre de combustion est un ensemble de chambre de combustion séquentielle.

4. Turbine à gaz selon la revendication 3, dans laquelle l'ensemble de chambre de combustion comprend une pluralité de chambres de combustion tubulaires ; chaque chambre de combustion tubulaire comprenant en série un premier étage de combustion et un second étage de combustion.

5. Turbine à gaz selon la revendication 3, dans laquelle l'ensemble de chambre de combustion comprend un premier étage de combustion et un deuxième étage de combustion divisés par une turbine à haute pression ; en aval, le deuxième étage de combustion présente une turbine à basse pression.

6. Procédé d'exploitation d'un ensemble de turbine à gaz pour une centrale électrique alimentée par une source à deux combustibles ; le procédé comprenant les étapes suivantes :
a) fourniture d'un ensemble de turbine à gaz (1, 1', 20) selon la revendication 1 ;
b) commander la turbine à gaz (1, 1', 20) pour qu'elle fonctionne au fioul, dans laquelle au moins une vanne (24') du conduit de gaz combustible (12') est commandée pour être fermée ;
c) alimenter le premier conduit (26') en air refroidi à une température inférieure à la température d'auto-inflammation du gaz combustible ;
dans lequel :
- l'étape c) est réalisée de sorte que l'air refroidi est de l'air comprimé déversé par le compresseur (3') et refroidi par un échangeur de chaleur (8') à une température comprise entre 320 °C et 360 °C, de préférence à 340 °C ;
dans lequel l'étape c) est réalisée en continu pendant le fonctionnement au fioul.

7. Procédé selon la revendication 6, dans lequel la chambre de combustion comprend un premier étage de combustion et un deuxième étage de combustion (10) et l'étape c) est réalisée de telle sorte que l'air refroidi agit également comme air de purge ayant une pression supérieure à la pression du deuxième étage de combustion (10).
